# EUROPEAN PATENT APPLICATION

(11) **EP 2 700 896 A2**
(43) Date of publication of application: **26.02.2014**
(21) Application number: 13181592.0
(22) Date of filing: 23.08.2013
(51) Int. Cl.: F28F 11/04, F22B 37/00

(54) **Heat transfer tube repairing apparatus and method and steam generator**

(30) Priority: 23.08.2012 JP 2012184518
(71) Applicant: Mitsubishi Heavy Industries, Ltd., Tokyo 108-8215 (JP)
(72) Inventor: Morita, Hideyuki, TOKYO, 108-8215 (JP); Hirota, Kazuo, TOKYO, 108-8215 (JP); Kawakami, Ryoichi, TOKYO, 108-8215 (JP); Nishida, Shingo, TOKYO, 108-8215 (JP); Shimamura, Kengo, TOKYO, 108-8215 (JP); Kusakabe, Takaya, TOKYO, 108-8215 (JP)
(74) Representative: Intès, Didier Gérard André

(57) **Abstract**

A heat transfer tube repairing apparatus including a wire (111) that is flexible and is insertable into a heat transfer tube (66), a sleeve (112) that is fixed to a predetermined position in the longitudinal direction of the wire (111), a pair of pressing members (113) and (114) that is provided at the front and rear sides of the sleeve (112) in the longitudinal direction of the wire (111) and is able to press the inner surface of the heat transfer tube (66), and operation members (115) and (116) that are able to move the pressing members (113) and (114) between a pressing position where the pressing members press the inner surface of the heat transfer tube and a separating position where the pressing members are separated from the inner surface of the heat transfer tube.

## Description

### Field

The present invention relates to a heat transfer tube repairing apparatus and a heat transfer tube repairing method for repairing multiple heat transfer tubes used in a heat exchanger and a steam generator adopting the heat transfer tube repairing apparatus.

### Background

A nuclear power plant includes a nuclear reactor, a steam generator, a steam turbine, a power generator, and the like. For example, a pressurized water reactor (PWR) uses light water as reactor coolant and neutron moderator, and generates hot pressurized water which is not boiled throughout a reactor core. The steam generator generates steam by exchanging heat between the hot pressurized water (primary cooling water) and secondary cooling water. The steam turbine drives a turbine by the steam, and the power generator generates power by the driving force.

In the steam generator, a tube bundle shroud is disposed inside a hermetic hollow cylinder portion so as to have a predetermined gap with respect to the inner wall surface thereof, a plurality of heat transfer tubes are disposed inside the tube bundle shroud so as to form a reverse U-shape, the end portions of the respective heat transfer tubes are supported by a tube sheet, and the lower end portion of the cylinder portion is provided with an entrance side channel head and an exit side channel head for the primary cooling water. Further, a secondary cooling water entrance portion is provided inside the cylinder portion so as to be located above the tube bundle shroud, a steam-water separator and a moisture separator are disposed in parallel in the vertical direction, and a steam outlet is provided thereabove.

Accordingly, the primary cooling water is supplied from a cooling water pipe to the plurality of heat transfer tubes through the entrance side channel head, and the secondary cooling water is supplied from the entrance portion into the cylinder portion. Then, when heat is exchanged between the primary cooling water (hot water) flowing through the plurality of heat transfer tubes and the secondary cooling water (cold water) circulating inside the cylinder portion, the secondary cooling water absorbs heat to thereby generate steam. Subsequently, moisture is removed from the generated steam by the steam-water separator, and the steam from which the moisture is removed by the moisture separator is discharged from the steam outlet. Meanwhile, the primary cooling water subjected to the heat exchange process is discharged from the exit side channel head.

Incidentally, since the steam generator has a configuration in which pressurized water as the primary cooling water is supplied into the plurality of heat transfer tubes and the external secondary cooling water is heated to generate steam, the heat transfer tubes may be easily vibrated. In this case, the lower end portions of the heat transfer tubes are supported by the tube sheet and the upper U-bent portions are supported by bracing metal fittings inserted between the respective heat transfer tubes. However, there is a concern that the heat transfer tubes may be partially degraded due to the use for a long period of time. Further, there is a concern that the heat transfer tube may be thinned and broken due to the abrasion of the contact portion with respect to the bracing metal fitting or the penetration hole of the tube support plate. Since there is a possibility that the function of the heat transfer tube may be damaged when the heat transfer tube is degraded or thinned, an operation is performed in which the heat transfer tubes are not used for some time, and plugs are fixed to the respective end portions of the heat transfer tubes so as to interrupt the inflow of the primary cooling water or a stabilizer (a wire or the like) is inserted into the heat transfer tubes so as to suppress a vibration.

As such a technique, there is known a stabilizer which includes single or plural wires. For example, the technique is disclosed in Patent Literatures below. In a heat exchange tube vibration stabilizing method and a heat exchange tube vibration stabilizing apparatus disclosed in Patent Literature 1, a plurality of sleeves are fixed to a cable at a predetermined interval in the axial direction, and a tube plug attachment seal assembly is formed by fixing a front end assembly to a front end portion. Then, the vibration stabilizing apparatus is inserted and fixed into the heat transfer tube so as to stabilize a vibration of a degraded tube. Further, in a tube vibration energy absorbing method and a tube vibration energy absorbing apparatus disclosed in Patent Literature 2, a cable end portion attachment tool is connected to a cable front end member through a plurality of cables, and the absorbing apparatus is inserted into the heat transfer tube so as to absorb the vibration energy of the tube.

### Citation List

### Patent Literature

Patent Literature 1: Japanese Patent Application Laid-open No. 60-159595
Patent Literature 2: Japanese Patent No. 2759090 Summary

### Technical Problem

Incidentally, in the above-described techniques of the related art, it is possible to suppress the vibration of the heat transfer tube which may not be used due to a decrease in thickness with the abrasion. However, when the heat transfer tube is broken due to the abrasion thereof, it is difficult to sufficiently suppress the vibration of the broken heat transfer tube.

The invention is made to solve the above-described problems, and it is an object of the invention to provide a heat transfer tube repairing apparatus, a heat transfer tube repairing method, and a steam generator capable of appropriately suppressing a vibration of a heat transfer tube.

### Solution to Problem

According to an aspect of the present invention, a heat transfer tube repairing apparatus includes: a cord-like member that is flexible and inserted into a heat transfer tube; a sleeve that is fixed to a predetermined position in a longitudinal direction of the cord-like member; a pair of pressing members that is provided at the front and rear sides of the sleeve in the longitudinal direction of the cord-like member for pressing an inner surface of the heat transfer tube; and an operation member that moves the pressing members between a pressing position where the pressing members press the inner surface of the heat transfer tube and a separating position where the pressing members are separated from the inner surface of the heat transfer tube.

Accordingly, the cord-like member is inserted into the heat transfer tube, the sleeve is positioned to a position facing the damaged portion of the heat transfer tube, and the respective pressing members present at the separating position where the pressing members are separated from the inner surface of the heat transfer tube are moved by the operation member to the pressing position where the pressing members press the inner surface of the heat transfer tube. Then, since the sleeve is disposed at the position facing the damaged portion of the heat transfer tube and the front and rear pressing members press the front and rear sides of the damaged portion of the heat transfer tube, the sleeve is held at the position facing the damaged portion of the heat transfer tube. For this reason, it is possible to appropriately suppress a vibration of the heat transfer tube not only in the heat transfer tube which is thinned by the abrasion but also the heat transfer tube which is broken at the damaged portion.

Advantageously, in the heat transfer tube repairing apparatus, the operation member includes a regulation member that engages with the pressing members so as to hold the pressing members at the pressing position or the separating position, and a releasing member that releases the engagement of the regulation member with respect to the pressing members.

Accordingly, the front and rear sides of the damaged portion of the heat transfer tube may be pressed by the pressing member by releasing the engagement of the regulation member with respect to the pressing member through the releasing member when the pressing member is inserted into the heat transfer tube while being held at the separating position and the sleeve is disposed at the position facing the damaged portion of the heat transfer tube. Thus, it is possible to hold the sleeve at a predetermined position of the heat transfer tube with a simple configuration.

Advantageously, in the heat transfer tube repairing apparatus, the pressing members are held at the pressing position by a biasing force, and the operation member holds the pressing members at the separating position against the biasing force.

Accordingly, the pressing member may be held at the pressing position by the biasing force, and hence the configuration may be simplified.

Advantageously, in the heat transfer tube repairing apparatus, each pressing member includes an elastic member of which the base end portion is fixed to the outside of the sleeve and the front end portion presses the inner surface of the heat transfer tube by an elastic force, and a plurality of the elastic members are disposed at a predetermined interval in the circumferential direction of the sleeve and are disposed at the front and rear portions in the longitudinal direction of the cord-like member.

Accordingly, since the front and rear pressing members respectively press the inner surface of the heat transfer tube by the elastic force when the sleeve is disposed at the position facing the damaged portion of the heat transfer tube, it is possible to appropriately hold the end portions of the broken heat transfer tube even when the heat transfer tube is broken.

Advantageously, in the heat transfer tube repairing apparatus, the regulation member includes a regulation ring which holds the elastic member at the separating position.

Accordingly, since the regulation member is configured as the regulation ring, the structure may be simplified and the operability of holding and releasing the elastic member may be improved.

Advantageously, in the heat transfer tube repairing apparatus, the cord-like member is disposed inside the heat transfer tube and has a vibration suppressing function to suppress vibration of the heat transfer tube.

Accordingly, since the cord-like member is separated from the inner surface of the heat transfer tube by a predetermined gap, the heat transfer tube and the cord-like member may relatively move in the radial direction. For this reason, when the heat transfer tube is vibrated, the cord-like member relatively moves in the radial direction of the heat transfer tube, so that the cord-like member and the heat transfer tube interfere with each other. Thus, the vibration energy of the heat transfer tube is dispersed by the vibration energy of the cord-like member, and hence the vibration of the heat transfer tube may be effectively absorbed and suppressed.

Advantageously, in the heat transfer tube repairing apparatus, a plugging member that blocks the end portion of the heat transfer tube is connected to a rear end portion of the cord-like member.

Accordingly, the end portion of the heat transfer tube may be easily blocked by the plugging member, and hence the workability may be improved.

Advantageously, in the heat transfer tube repairing apparatus, the heat transfer tube includes a U-shaped portion, and the sleeve is disposed in the U-shaped portion.

Accordingly, since the sleeve is disposed at the U-shaped portion of the heat transfer tube which is easily vibrated, the vibration of the U-shaped portion of the heat transfer tube may be appropriately suppressed.

According to another aspect of the present invention, a heat transfer tube repairing method includes: inserting a flexible cord-like member into a heat transfer tube; positioning a repairing member provided at a predetermined position in the longitudinal direction of the cord-like member to a position facing a damaged portion in the heat transfer tube; and pressing the repairing member against inner surfaces at the front and rear sides of the damaged portion of the heat transfer tube.

Accordingly, since the cord-like member is inserted into the heat transfer tube, the repairing member is positioned to a position facing the damaged portion of the heat transfer tube, and the repairing member is pressed against the inner surfaces at the front and rear sides of the damaged portion of the heat transfer tube, it is possible to effectively absorb and suppress the vibration of the heat transfer tube even when the heat transfer tube is vibrated and is broken at the damaged portion.

According to another aspect of the present invention, a steam generator includes: a cylinder portion that is formed in a hermetic hollow shape; a heat transfer tube bundle that includes a plurality of heat transfer tubes which are disposed inside the cylinder portion so as to form a reverse U-shape and through which primary cooling water flows; a tube sheet that is fixed to a lower portion inside the cylinder portion and supports end portions of the plurality of heat transfer tubes; an entrance side channel head and an exit side channel head that are provided at the lower end portion of the cylinder portion and communicate with the respective end portions of the plurality of heat transfer tubes; a water feeding portion that supplies secondary cooling water into the cylinder portion; a steam outlet that is provided at the upper end portion of the cylinder portion; and a heat transfer tube repairing member that is pressed and held on inner surfaces at the front and rear sides of a damaged portion of the heat transfer tube.

Accordingly, when pressurized water as the primary cooling water flows through the plurality of heat transfer tubes and heats the secondary cooling water flowing inside the cylinder portion to generate steam, the heat transfer tube is easily vibrated. At this time, since the heat transfer tube repairing member is held while being pressed against the inner surfaces at the front and rear sides of the damaged portion of the heat transfer tube even when the heat transfer tube is vibrated, it is possible to effectively absorb and suppress the vibration of the heat transfer tube even when the heat transfer tube is broken at the damaged portion.

### Advantageous Effects of Invention

According to the heat transfer tube repairing apparatus, the heat transfer tube repairing method, and the steam generator of the invention, since there is provided the heat transfer tube repairing member with the pair of pressing members provided at the front and rear sides of the sleeve in the longitudinal direction of the cord-like member and pressing the inner surface of the heat transfer tube, the vibration of the heat transfer tube may be appropriately suppressed.

### Brief Description of Drawings

FIG. 1 is a schematic diagram illustrating a state where a heat transfer tube repairing apparatus according to a first embodiment of the invention is attached to a steam generator.
FIG. 2 is a front view illustrating the heat transfer tube repairing apparatus of the first embodiment.
FIG. 3 is a front view illustrating the attachment state of the heat transfer tube repairing apparatus.
FIG. 4 is a cross-sectional view taken along the line IV-IV of FIG. 3 and illustrating a plane of the heat transfer tube repairing apparatus.
FIG. 5 is a schematic configuration diagram illustrating a nuclear power plant adopting the steam generator of the first embodiment.
FIG. 6 is a schematic configuration diagram illustrating the steam generator of the first embodiment.
FIG. 7 is a front view illustrating a heat transfer tube repairing apparatus according to a second embodiment of the invention.
FIG. 8 is a front view illustrating a heat transfer tube repairing apparatus according to a third embodiment of the invention.
FIG. 9 is a schematic diagram illustrating a heat transfer tube repairing apparatus according to a fourth embodiment of the invention.

### Description of Embodiments

Hereinafter, preferred embodiments of a heat transfer tube repairing apparatus, a heat transfer tube repairing method, and a steam generator according to the invention will be described in detail by referring to the accompanying drawings. Furthermore, the invention is not limited to the embodiments. Further, in a case where plural embodiments are present, the respective embodiments may be combined with one another.

### [First Embodiment]

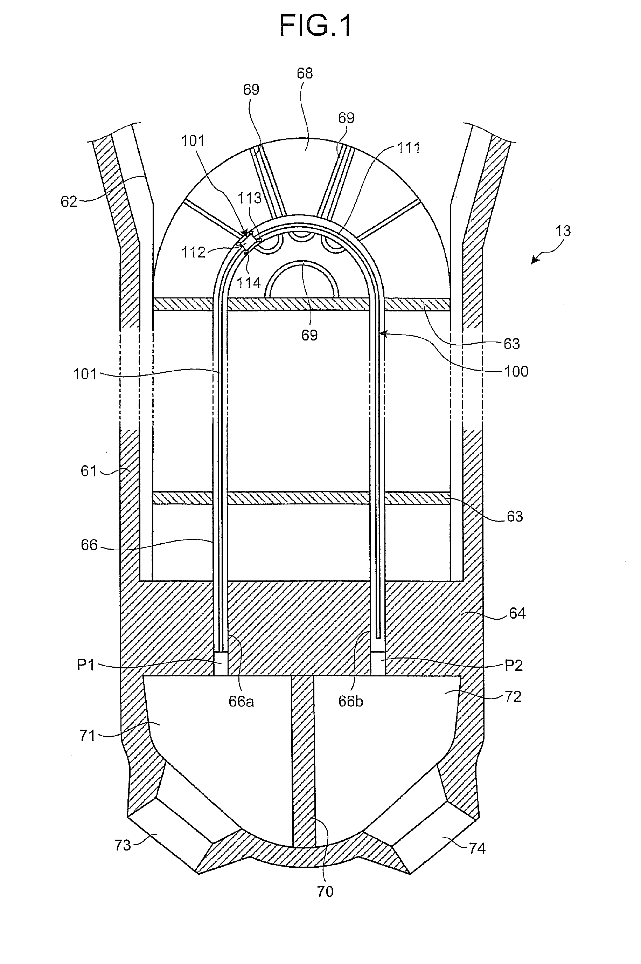

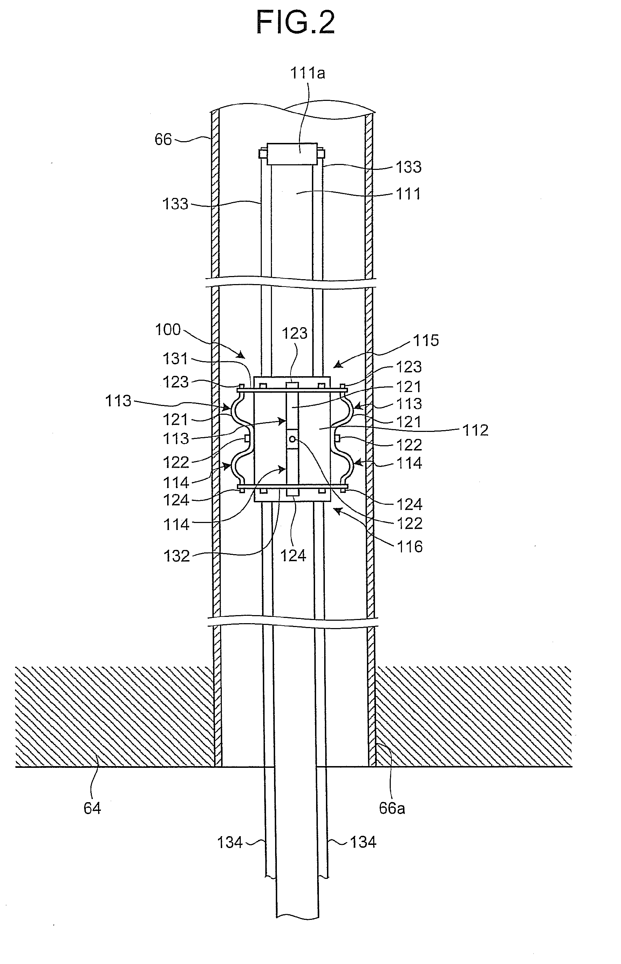

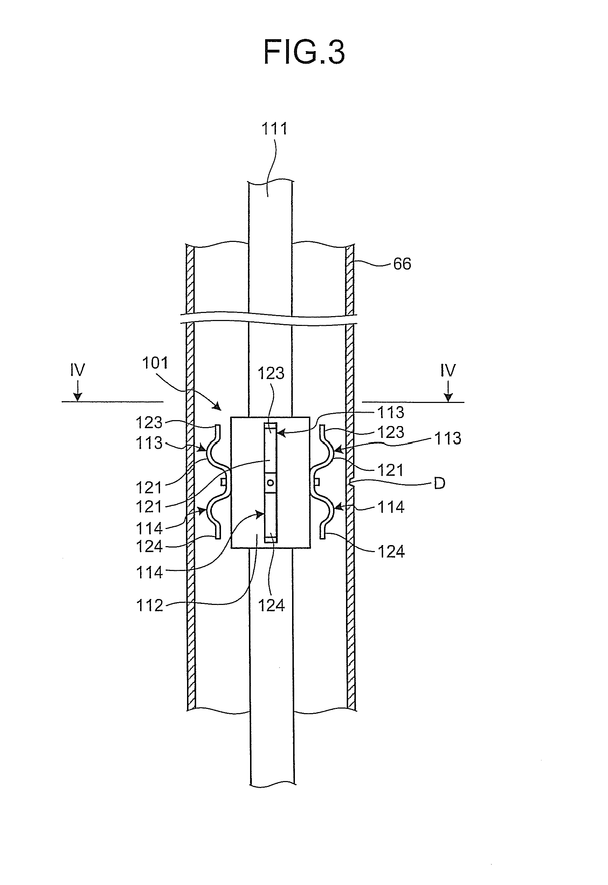

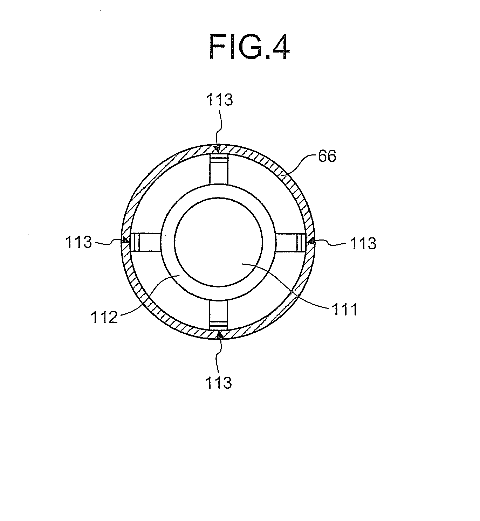

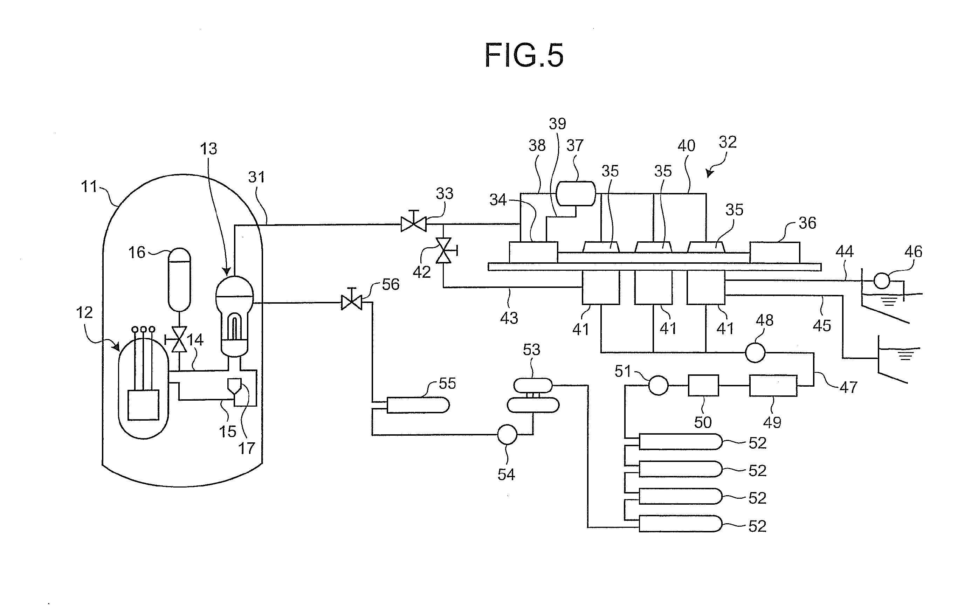

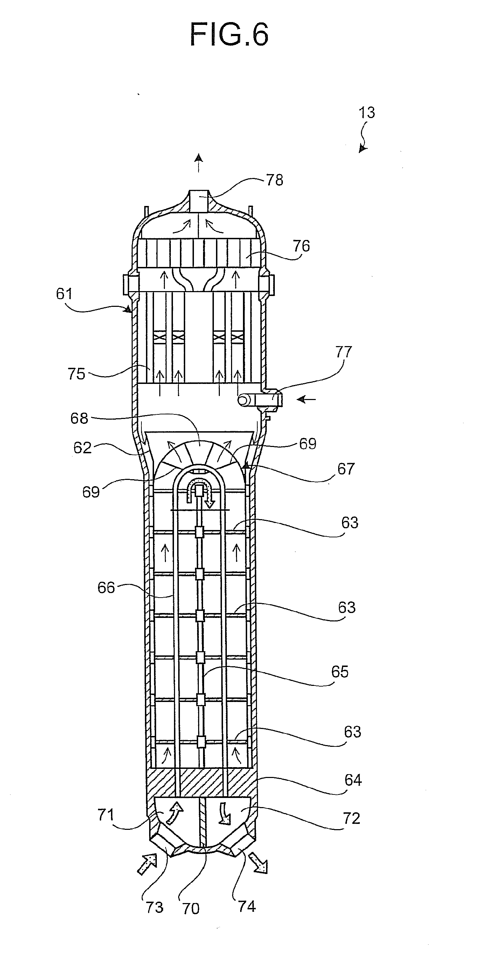

FIG. 1 is a schematic diagram illustrating a state where a heat transfer tube repairing apparatus according to a first embodiment of the invention is attached to a steam generator, FIG. 2 is a front view illustrating the heat transfer tube repairing apparatus of the first embodiment, FIG. 3 is a front view illustrating the attachment state of the heat transfer tube repairing apparatus, FIG. 4 is a cross-sectional view taken along the line IV-IV of FIG. 3 and illustrating the plane of the heat transfer tube repairing apparatus, FIG. 5 is a schematic configuration diagram illustrating a nuclear power plant adopting the steam generator of the first embodiment, and FIG. 6 is a schematic configuration diagram illustrating the steam generator of the first embodiment.

A nuclear reactor of the first embodiment is a pressurized water reactor (PWR) that uses light water as reactor coolant and neutron moderator, uses the light water as hot pressurized water which is not boiled throughout an entire reactor core, sends the hot pressurized water to a steam generator to generate steam by a heat exchange, and sends the steam to a turbine power generator to generate power.

In a nuclear power plant with the pressurized water reactor of the first embodiment, as illustrated in FIG. 5, a containment 11 accommodates a pressurized water reactor 12 and a steam generator 13 therein, the pressurized water reactor 12 and the steam generator 13 are connected to each other through a high temperature side feeding pipe 14 and a low temperature side feeding pipe 15, the high temperature side feeding pipe 14 is provided with a pressurizer 16, and the low temperature side feeding pipe 15 is provided with a primary cooling water pump 17. In this case, light water is used as moderator and primary cooling water (coolant), and a primary cooling system is controlled by the pressurizer 16 so that the primary cooling system is maintained in a high-pressure state of about 150 to 160 atm in order to suppress the primary cooling water from boiling in a reactor core portion.

Accordingly, in the pressurized water reactor 12, the light water as the primary cooling water is heated by low-enrichment uranium or MOX as a fuel (reactor fuel), and the high-temperature primary cooling water is sent to the steam generator 13 through the high temperature side feeding pipe 14 while being maintained at a predetermined high pressure by the pressurizer 16. In the steam generator 13, a heat exchange is performed between the hot pressurized primary cooling water and the secondary cooling water, and the cooled primary cooling water is returned to the pressurized water reactor 12 through the low temperature side feeding pipe 15.

The steam generator 13 is connected to a steam turbine 32 through a pipe 31 which feeds the heated secondary cooling water, that is, steam, and the pipe 31 is provided with a main steam isolation valve 33. The steam turbine 32 includes a high-pressure turbine 34 and a low-pressure turbine 35, and is connected with a power generator (power generating equipment) 36. Further, a moisture separator 37 is provided between the high-pressure turbine 34 and the low-pressure turbine 35, and a cooling water branch pipe 38 branched from the pipe 31 is connected to the moisture separator 37. Meanwhile, the high-pressure turbine 34 and the moisture separator 37 are connected to each other by a low-temperature reheating pipe 39, and the moisture separator 37 and the low-pressure turbine 35 are connected to each other by a high-temperature reheating pipe 40.

Further, the low-pressure turbine 35 of the steam turbine 32 includes a condenser 41, and the condenser 41 is connected with a turbine bypassing pipe 43 extending from the pipe 31 and having a bypass valve 42 and is connected with an intake pipe 44 and a drainpipe 45 which are used to feed and discharge the cooling water (for example, sea water). The intake pipe 44 includes a circulating water pump 46, and is disposed under the sea along with the drainpipe 45.

Then, the condenser 41 is connected with a pipe 47, and is connected with a condensate pump 48, a grand condenser 49, a condensate demineralizer 50, a condensate booster pump 51, and a low-pressure feed water heater 52. Further, the pipe 47 is connected with a deaerator 53, and is provided with a main water feeding pump 54, a high-pressure feed water heater 55, and a main water feeding control valve 56.

Accordingly, the steam which is generated by the heat exchange with the hot pressurized primary cooling water in the steam generator 13 is sent to the steam turbine 32 (from the high-pressure turbine 34 to the low-pressure turbine 35) through the pipe 31, and the steam turbine 32 is driven by the steam to generate power by the power generator 36. At this time, the steam which is generated from the steam generator 13 drives the high-pressure turbine 34. Then, the moisture which is contained in the steam is removed by the moisture separator 37 and the steam is heated to drive the low-pressure turbine 35. Then, the steam which is used to drive the steam turbine 32 is cooled by the sea water in the condenser 41 so as to become steam condensate, and the steam condensate is returned to the steam generator 13 through the grand condenser 49, the condensate demineralizer 50, the low-pressure feed water heater 52, the deaerator 53, the high-pressure feed water heater 55, and the like.

In the steam generator 13 of the nuclear power plant with such a configuration, as illustrated in FIG. 6, a cylinder portion 61 is formed in a hermetic hollow cylindrical shape, and the diameter of the lower portion is slightly smaller than that of the upper portion. A cylindrical tube bundle shroud 62 is disposed at the lower portion of the cylinder portion 61 so as to have a predetermined gap with respect to the inner wall surface of the cylinder portion. A plurality of tube support plates 63 are disposed inside the tube bundle shroud 62 so as to correspond to predetermined height positions, a tube sheet 64 is fixed to the lower portion of the tube support plate 63, and the respective tube support plates 63 are supported by a plurality of stay rods 65 which extend upward from the tube sheet 64. Then, a heat transfer tube bundle 67 which is formed in a reverse U-shape and includes a plurality of heat transfer tubes 66 is disposed inside the tube bundle shroud 62.

In the heat transfer tube bundle 67, the upper portions of the respective heat transfer tubes 66 are formed as a U-bent portion 68 corresponding to a U-shaped portion, the lower end portions thereof are supported by the tube sheet 64 in a tube expanded state, and the middle portions (intermediate portions) thereof are supported by the plurality of tube support plates 63. In the U-bent portion 68, the plurality of heat transfer tubes are substantially disposed in parallel in the inner and outer direction (the up and down direction) of the tube bundle shroud 62, and are substantially disposed in parallel in the radial direction (the horizontal direction) of the tube bundle shroud 62. Then, a plurality of bracing metal fittings 69 are interposed between the respective heat transfer tubes disposed in the radial direction of the tube bundle shroud 62.

Further, the lower portion of the cylinder portion 61 is formed in a spherical surface shape, and an entrance chamber 71 and an exit chamber 72 are defined by a partition wall 70 below the tube sheet 64. Then, the lower portion is provided with an inlet nozzle 73 and an outlet nozzle 74, one end portions of the respective heat transfer tubes 66 communicate with the entrance chamber 71, and the other end portions thereof communicate with the exit chamber 72.

Further, the upper side of the heat transfer tube bundle 67 of the cylinder portion 61 is provided with a steam-water separator 75 which separates the fed water into steam and hot water and a moisture separator 76 which removes moisture of the separated steam so that the steam substantially becomes dry steam. Further, in the cylinder portion 61, a water feeding pipe 77 which feeds the secondary cooling water into the cylinder portion is connected between the heat transfer tube bundle 67 and the steam-water separator 75, and the ceiling portion of the cylinder portion is provided with a steam outlet 78. That is, the secondary cooling water which is fed from the water feeding pipe 77 into the cylinder portion flows down along the gap between the tube bundle shroud 62 and the cylinder portion, circulates upward in the tube sheet 64, and exchanges heat with the hot water (the primary cooling water) flowing through the respective heat transfer tubes 66 in a case where the secondary cooling water rises inside the heat transfer tube bundle 67.

Accordingly, as illustrated in FIGS. 5 and 6, the primary cooling water which is heated by the pressurized water reactor 12 is sent to the entrance chamber 71 of the steam generator 13 through the high temperature side feeding pipe 14, circulates so as to pass through the plurality of heat transfer tubes 66, and reaches the exit chamber 72. Meanwhile, the secondary cooling water which is cooled by the condenser 41 is sent to the water feeding pipe 77 of the steam generator 13 through the cooling water pipe 47, and passes through the cylinder portion 61 so as to exchange heat with the hot water (the primary cooling water) flowing through the heat transfer tube 66. That is, the hot pressurized primary cooling water and the secondary cooling water exchange heat therebetween inside the cylinder portion 61, and the cooled primary cooling water is returned from the exit chamber 72 to the pressurized water reactor 12 through the cooling water pipe 15. Meanwhile, the secondary cooling water which exchanges heat with the hot pressurized primary cooling water rises inside the cylinder portion 61, and is separated into steam and hot water by the steam-water separator 75. Then, the moisture of the steam is removed by the moisture separator 76, and the steam is sent from the steam outlet 78 to the steam turbine 32 through the pipe 31.

In the steam generator 13 with such a configuration, as illustrated in FIG. 1, pressurized water as the primary cooling water flows through the plurality of heat transfer tubes 66, and heats the secondary cooling water flowing through the cylinder portion 61 so as to generate steam, so that the heat transfer tubes are easily vibrated. Then, the lower end portions of the heat transfer tubes 66 are supported by the tube sheet 64, and the U-bent portion 68 is supported by the bracing metal fittings 69. However, there is a possibility that a vibration may be generated in the heat transfer tubes. For this reason, when the heat transfer tube 66 is used for a long period of time, the vicinity of the penetration hole of the tube support plate 63 or the contact portion with respect to the bracing metal fitting 69 is abraded and is thinned. As a result, the portions may be broken. When the damage of the heat transfer tube 66 is found by an inspection, the heat transfer tube may not be used. Then, plugs are attached to the respective end portions of the heat transfer tubes 66 so as to prohibit the inflow of the primary cooling water and bracing metal fitting members are inserted thereinto so as to suppress a vibration.

A heat transfer tube repairing apparatus 100 of the first embodiment is used to repair the damaged portions of the unusable heat transfer tubes 66 in the steam generator 13 by a repairing member (heat transfer tube repairing member) 101. Then, when the repairing member 101 is attached to the heat transfer tube 66 and end portions 66a and 66b of the heat transfer tube 66 are plugged by plugs P1 and P2 so as to prohibit the inflow of the primary cooling water, the repairing member 101 may suppress a vibration in the heat transfer tube 66, that is, the U-bent portion 68. In this case, one plug P1 is connected to the heat transfer tube repairing apparatus 100.

As illustrated in FIGS. 2 to 4, the heat transfer tube repairing apparatus 100 includes a wire (cord-like member) 111 which is flexible and is insertable into the heat transfer tube 66, a sleeve 112 which is fixed to a predetermined position of the wire 111 in the longitudinal direction, a pair of pressing members 113 and 114 that is provided at the front and rear sides of the sleeve 112 in the longitudinal direction of the wire 111 and is able to press the inner surface of the heat transfer tube 66, and operation members 115 and 116 that are able to move the pressing members 113 and 114 between a pressing position where the pressing members press the inner surface of the heat transfer tube 66 and a separating position where the pressing members are separated from the inner surface of the heat transfer tube 66. In this case, the sleeve 112 and the pair of pressing members 113 and 114 constitute the repairing member 101, and the wire 111 constitutes a vibration suppressing member (vibration suppressing function).

A wire 101 is made by stainless steel so that the outer diameter is smaller than the inner diameter of the heat transfer tube 66 and the length is shorter than the length of the heat transfer tube 66. The sleeve 112 is made by stainless steel, is formed in a cylindrical shape, has a predetermined length, and is fixed to the outer peripheral portion of the wire 111.

The pair of pressing members 113 and 114 may be held at the pressing position by the elastic force (the biasing force), and the operation members 115 and 116 may hold the pressing members 113 and 114 at the separating position against the elastic force.

That is, a plurality of (in this embodiment, four) spring members 121 are disposed in the outer peripheral portion of the sleeve 112 at a predetermined interval (the same interval) in the circumferential direction. The spring members 121 are disposed in the longitudinal direction of the sleeve 112 (the wire 111), and the middle portion thereof is fixed to the sleeve 112 by a fixing member (a welding portion, a screw, or the like) 113. The respective end portions of the spring member 121 are located at the front and rear sides (the upper and lower sides of FIGS. 2 and 3) in the longitudinal direction of the sleeve 112 (the wire 111), and extend so as to be curved outward in the radial direction of the sleeve 112. Then, the two front and rear curved portions serve as the pressing members 113 and 114.

That is, in the pair of front and rear pressing members 113 and 114, the base end portions thereof are fixed to the outside of the sleeve 112, and the front end portions thereof are formed in a curved shape. Accordingly, the pressing members serve as the elastic members that press the inner surface of the heat transfer tube 66 by the elastic force.

The operation members 115 and 116 include regulation members 131 and 132 that engage with the pressing members 113 and 114 so as to hold the pressing members at the separating position and releasing members 133 and 134 that release the engagement of the regulation members 131 and 132 with respect to the pressing members 113 and 114. That is, as described above, the respective end portions of the spring member 121 extend forward and rearward in the longitudinal direction of the sleeve 112 and are curved outward in the radial direction thereof, thereby forming the pressing members 113 and 114. The front end portions of the respective pressing members 113 and 114 are provided with locking portions 123 and 124. Each of the locking portions 123 and 124 is formed in a concave shape which is curved inward in the radial direction of the sleeve 112.

The regulation members 131 and 132 are annular regulation rings, and are fitted to the respective locking portions 123 and 124 in the spring member 121 from the outside. Accordingly, the pressing members 113 and 114 are deformed inward in the radial direction of the sleeve 112 against the elastic force so as to be held at the separating position.

The releasing members 133 and 134 are flexible, and are disposed inside the heat transfer tube 66 along the wire 111 at a plurality of (in this embodiment, four) positions. In one releasing member 133, one end portion thereof is connected to a position at a predetermined interval (the same interval) in the circumferential direction of the regulation member 131, and the other end portion thereof is connected to a support portion 111a fixed to the front end portion of the wire 111. In the other releasing member 134, one end portion thereof is connected to a position of a predetermined interval (the same interval) in the circumferential direction of the regulation member 132, and the other end portion thereof extends toward the base end portion of the wire 111.

Here, a heat transfer tube repairing method by the heat transfer tube repairing apparatus 100 with such a configuration will be described.

As illustrated in FIG. 1, an operator inserts the front end portion of the wire 111 of the heat transfer tube repairing apparatus 100 into one end portion 66a of the heat transfer tube 66 in the entrance chamber 71 of the cylinder portion 61, and moves the front end portion thereof to the other end portion 66b of the heat transfer tube 66 through the U-bent portion 68 (inserting step). Then, the operator positions the front end portion of the wire 111 to the exit chamber 72 of the cylinder portion 61 and moves the front end portion inside the exit chamber 72 so that the end portion of the releasing member 133 is separated from the support portion 111a of the wire 111.
In this case, it is desirable that the releasing member 133 be longer than the front end portion of the wire 111.

Subsequently, the operator inside the entrance chamber 71 or the exit chamber 72 moves the wire 111 inside the heat transfer tube 66 so as to position the sleeve 112 to a position facing the damaged portion D (see FIG. 3) of the heat transfer tube 66 (repairing member positioning step). That is, as illustrated in FIG. 2, the pressing members 113 and 114 are located at the separating position where the separating members move toward the inside (the center) from the inner surface of the heat transfer tube 66 when the regulation members 131 and 132 are fitted to the locking portions 123 and 124, and may move the sleeve 112 inside the heat transfer tube 66 along with the wire 111. Then, the sleeve 112 is positioned to a position facing the damaged portion D (see FIG. 3) of the heat transfer tube 66. In this case, the position of the damaged portion D of the heat transfer tube 66 is measured in advance.

When the sleeve 112 is positioned to the position facing the damaged portion D, the wire 111 is immovably supported. Then, the operator inside the exit chamber 72 pulls the respective releasing members 133 so as to separate the regulation member 131 from the locking portion 123, and the operator inside the entrance chamber 71 pulls the respective releasing members 134 so as to separate the regulation member 132 from the locking portion 124. Then, the pressing members 113 and 114 are deformed outward by the elastic force as illustrated in FIG. 3 when the regulation members 131 and 132 are released from the locking portions 123 and 124, and move toward the pressing position where the pressing members press the inner surface of the heat transfer tube 66 (repairing member pressing step).

In this state, the sleeve 112 is located inside the heat transfer tube 66 so as to face the damaged portion D of the heat transfer tube 66, so that one pressing member 113 presses the inner surface of the heat transfer tube 66 at one side of the damaged portion D and the other pressing member 114 presses the inner surface of the heat transfer tube 66 at the other side of the damaged portion D. That is, the sleeve 112 is fixed to the inside of the heat transfer tube 66 at the front and rear sides of the damaged portion D of the heat transfer tube 66. Subsequently, the end portions 66a and 66b of the heat transfer tube 66 which is not used are plugged by the plugs P1 and P2, and the wire 111 is disposed inside the heat transfer tube, that is, the U-bent portion 68.

For this reason, even when the damaged portion D is abraded due to the vibration of the heat transfer tube 66 and the heat transfer tube 66 is broken at the damaged portion D, the end portions of the heat transfer tube 66 at the front and rear sides of the breakage position are held in a connection state by the sleeve 112 and the pressing members 113 and 114. Accordingly, it is possible to suppress a large vibration from being generated in the heat transfer tube 66. Furthermore, since the wire 111 is disposed inside the heat transfer tube 66, it is possible to suppress a vibration of the heat transfer tube 66 by the wire 111 in all of the sleeve 112 and the pressing members 113 and 114. In this case, the damaged portion D of the heat transfer tube 66 may be the U-bent portion 68 and the straight portion.

In this way, the heat transfer tube repairing apparatus of the first embodiment includes the wire 111 which is flexible and is insertable into the heat transfer tube 66, the sleeve 112 which is fixed to a predetermined position of the wire 111 in the longitudinal direction, the pair of pressing members 113 and 114 that is provided at the front and rear sides of the sleeve 112 in the longitudinal direction of the wire 111 and is able to press the inner surface of the heat transfer tube 66, and the operation members 115 and 116 that are able to move the pressing members 113 and 114 between the pressing position where the pressing members press the inner surface of the heat transfer tube and the separating position where the pressing members are separated from the inner surface of the heat transfer tube.

Accordingly, the wire 111 is inserted into the heat transfer tube 66, the sleeve 112 is positioned to a position facing the damaged portion D of the heat transfer tube 66, and the respective pressing members 113 and 114 located at the separating position where the pressing members are separated from the inner surface of the heat transfer tube 66 are moved by the operation members 115 and 116 to the pressing position where the pressing members press the inner surface of the heat transfer tube 66. Then, since the sleeve 112 is disposed at a position facing the damaged portion D of the heat transfer tube 66 and the front and rear pressing members 113 and 114 press the front and rear sides of the damaged portion D, the sleeve 112 is held at a position facing the damaged portion D of the heat transfer tube 66. For this reason, it is possible to appropriately suppress a vibration of the heat transfer tube 66 not only in the heat transfer tube 66 which is thinned by the abrasion but also the heat transfer tube 66 which is broken at the damaged portion D.

In the heat transfer tube repairing apparatus of the first embodiment, as the operation members 115 and 116, there are provided the regulation members 131 and 132 that engage with the pressing members 113 and 114 so as to hold the pressing members at the separating position and the releasing members 133 and 134 that release the engagement of the regulation members 131 and 132 with respect to the pressing members 113 and 114. Accordingly, when the pressing members 113 and 114 are inserted into the heat transfer tube 66 while being positioned at the separating position and the sleeve 112 is disposed at a position facing the damaged portion D of the heat transfer tube 66, the engagement of the regulation members 131 and 132 with respect to the pressing members 113 and 114 is released by the releasing members 133 and 134, so that the front and rear sides of the damaged portion D of the heat transfer tube 66 may be pressed by the pressing members 113 and 114. Accordingly, it is possible to hold the sleeve 112 at a predetermined position in the heat transfer tube 66 with a simple configuration.

In the heat transfer tube repairing apparatus of the first embodiment, the pressing members 113 and 114 may be held at the pressing position by the elastic force and the operation members 115 and 116 may hold the pressing members 113 and 114 at the separating position against the elastic force. Accordingly, the pressing members 113 and 114 may be held at the pressing position by the elastic force, and hence the configuration may be simplified.

In the heat transfer tube repairing apparatus of the first embodiment, each of the pressing members 113 and 114 is configured as a spring member of which the base end portion is fixed to the outside of the sleeve 112 and the front end portion presses the inner surface of the heat transfer tube 66 by the elastic force, and the plurality of pressing members are disposed at a predetermined interval in the circumferential direction of the sleeve 112, and are disposed at the front and rear portions of the sleeve 112 in the longitudinal direction. Accordingly, when the sleeve 112 is disposed at a position facing the damaged portion D of the heat transfer tube 66, the front and rear pressing members 113 and 114 respectively press the inner surface of the heat transfer tube 66 by the elastic force. For this reason, even when the heat transfer tube 66 is broken, the end portions of the broken heat transfer tube 66 may be appropriately held.

In the heat transfer tube repairing apparatus of the first embodiment, the regulation members 131 and 132 are the regulation rings which may hold the pressing members 113 and 114 at the separating position. Accordingly, since the regulation members 131 and 132 are configured as the regulation rings, it is possible to simplify the structure and to improve the operability of holding and releasing the pressing members 113 and 114.

In the heat transfer tube repairing apparatus of the first embodiment, the wire 111 is disposed inside the heat transfer tube 66, and has a vibration suppressing function capable of suppressing the vibration of the heat transfer tube 66. Accordingly, since the wire 111 is separated from the inner surface of the heat transfer tube 66 by a predetermined gap, the heat transfer tube 66 and the wire 111 are relatively movable in the radial direction. For this reason, when the heat transfer tube 66 is vibrated, the wire 111 relatively moves in the radial direction of the heat transfer tube 66, and the wire 111 and the heat transfer tube 66 interfere with each other. Accordingly, the vibration energy of the heat transfer tube 66 is dispersed by the vibration energy of the wire 111, and hence the vibration of the heat transfer tube 66 may be effectively absorbed and suppressed.

In the heat transfer tube repairing apparatus of the first embodiment, the plug P1 which blocks the end portion of the heat transfer tube 66 may be connected to the rear end portion of the wire 111. Accordingly, it is possible to easily block the end portion 66a of the heat transfer tube 66 by the plug P1 and hence to improve the workability.

Further, the heat transfer tube repairing method of the first embodiment includes the inserting step of inserting the wire 111 into the heat transfer tube 66, the repairing member positioning step of positioning the repairing member 101 provided at a predetermined position of the wire 111 in the longitudinal direction to a position facing the damaged portion D of the heat transfer tube 66, and the repairing member pressing step of pressing the repairing member 101 against the front and rear inner surfaces of the damaged portion D of the heat transfer tube 66.

Accordingly, since the wire 111 is inserted into the heat transfer tube 66, the repairing member 101 is positioned to a position facing the damaged portion D of the heat transfer tube 66, and the repairing member 101 is pressed against the front and rear inner surfaces of the damaged portion D of the heat transfer tube 66, it is possible to effectively absorb and suppress the vibration of the heat transfer tube 66 even when the heat transfer tube 66 is vibrated and the damaged portion D is broken.

Further, the steam generator of the first embodiment is provided with the cylinder portion 61, the heat transfer tube bundle 67 that includes the U-bent portion 68, is disposed inside the cylinder portion 61, and includes the plurality of heat transfer tubes 66 through which the primary cooling water flows, the tube sheet 64 that is fixed to the lower portion inside the cylinder portion 61 and supports the end portions of the plurality of heat transfer tube 66, the plurality of tube support plates 63 that are fixed to the middle position inside the cylinder portion 61 and support the intermediate portions of the plurality of heat transfer tube 66, and the heat transfer tube repairing member 101 which is held while being pressed against the front and rear inner surfaces of the damaged portion D of the heat transfer tube 66.

Accordingly, when the pressurized water as the primary cooling water flows inside the plurality of heat transfer tubes 66 and heats the secondary cooling water flowing inside the cylinder portion 61 to generate steam, the heat transfer tube 66 is vibrated and abraded. Accordingly, the heat transfer tube may be easily broken. At this time, since the repairing member 101 is held while being pressed against the front and rear inner surfaces of the damaged portion D of the heat transfer tube 66 even when the heat transfer tube 66 is vibrated, it is possible to effectively absorb and suppress the vibration of the heat transfer tube 66 even when the heat transfer tube 66 is broken at the damaged portion D.

### [Second Embodiment]

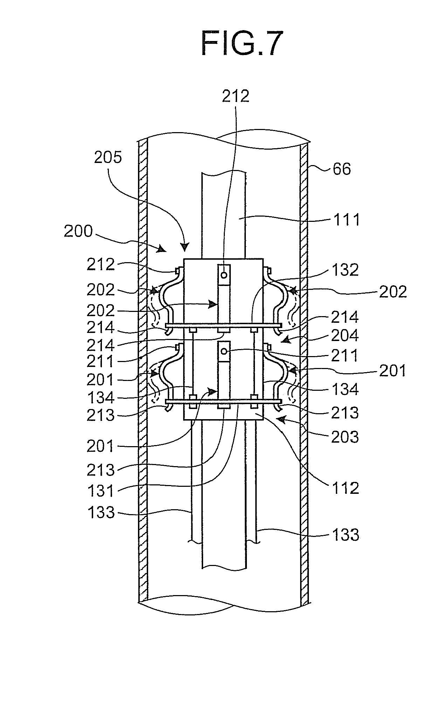

FIG. 7 is a front view illustrating a heat transfer tube repairing apparatus according to a second embodiment of the invention. Furthermore, the same reference signs will be given to the members having the same functions as those of the above-described embodiment, and the detailed description thereof will not be repeated.

In the second embodiment, as illustrated in FIG. 7, a heat transfer tube repairing apparatus 200 includes the wire 111 which is flexible and is insertable into the heat transfer tube 66, the sleeve 112 which is fixed to a predetermined position of the wire 111 in the longitudinal direction, a pair of pressing members 201 and 202 that is provided at the front and rear sides of the sleeve 112 in the longitudinal direction of the wire 111 and is able to press the inner surface of the heat transfer tube 66, and operation members 203 and 204 that are able to move the pressing members 201 and 202 between a pressing position where the pressing members press the inner surface of the heat transfer tube 66 and a separating position where the pressing members are separated from the inner surface of the heat transfer tube 66. In this case, the sleeve 112 and the pair of pressing members 201 and 202 constitute a repairing member 205.

The pair of pressing members 201 and 202 may be held at the pressing position by the elastic force (the biasing force), and the operation members 203 and 204 may hold the pressing members 201 and 202 at the separating position against the elastic force.

That is, the sleeve 112 is provided with a plurality of (in this embodiment, four) spring members constituting the pressing members 201 and 202 and disposed at a predetermined interval (the same interval) in the circumferential direction so as to be located at the front and rear portions (the upper and lower portions) of the outer peripheral portion. That is, the pressing members 201 and 202 as the spring members are disposed in the longitudinal direction of the sleeve 112 (the wire 111), the base end portions thereof are fixed to the sleeve 112 by fixing members (welding portions, screws, or the like) 211 and 212, and the front end portion thereof extend so as to be curved outward in the radial direction of the sleeve 112 at the rear portion (the lower portion of FIG. 7) of the sleeve 112 (the wire 111) in the longitudinal direction.

That is, the pair of front and rear pressing members 201 and 202 serve as the elastic members of which the base end portions are fixed to the outside of the sleeve 112 and the front end portions are formed in a curved shape and press the inner surface of the heat transfer tube 66 by the elastic force.

The operation members 203 and 204 include the regulation members 131 and 132 that engage with the pressing members 201 and 202 so as to hold the pressing members at the separating position and the releasing members 133 and 134 that release the engagement of the regulation members 131 and 132 with respect to the pressing members 201 and 202. That is, as described above, the front end portions of the pressing members 201 and 202 extend rearward in the longitudinal direction of the sleeve 112 and are curved outward in the radial direction, and the front end portions thereof are provided with the locking portions 213 and 214. The locking portions 213 and 214 are formed in a concave shape which is curved inward in the radial direction of the sleeve 112.

The regulation members 131 and 132 are annular regulation rings, and when the regulation members are fitted to the respective locking portions 213 and 214 of the pressing members 201 and 202 from the outside, the pressing members 201 and 202 are deformed inward in the radial direction of the sleeve 112 against the elastic force, and hence may be held at the separating position.

The releasing members 133 and 134 are flexible and are disposed inside the heat transfer tube 66 along the wire 111 at a plurality of (in this embodiment, four) positions. In the releasing member 133, one end portion thereof is connected to a position of a predetermined interval (the same interval) in the circumferential direction of the regulation member 131 and the other end portion thereof extends toward the base end portion of the wire 111. In the releasing member 134, one end portion thereof is connected to a position of a predetermined interval (the same interval) in the circumferential direction of the regulation member 131 and the other end portion thereof is connected to a position of a predetermined interval (the same interval) in the circumferential direction of the regulation member 132.

Here, a heat transfer tube repairing method by the heat transfer tube repairing apparatus 200 with such a configuration will be described.

The operator inserts the front end portion of the wire 111 of the heat transfer tube repairing apparatus 200 into the heat transfer tube 66, and positions the sleeve 112 to a position facing the damaged portion of the heat transfer tube 66. When the sleeve 112 is positioned to the position facing the damaged portion, the wire 111 is immovably supported. Then, the releasing member 133 is pulled so as to separate the regulation member 131 from the locking portion 213 and the releasing member 134 is pulled so as to separate the regulation member 132 from the locking portion 214. In this case, the regulation member 131 is pulled by the releasing member 133 so as to be separated from the locking portion 213, and the regulation member 132 is pulled through the releasing member 134 so as to be separated from the locking portion 214. Then, the regulation member 132 is separated downward so as to pass through the outside of the pressing member 201 while deforming the pressing member 201 inward. Then, when the regulation members 131 and 132 are released from the locking portions 213 and 214, the pressing members 201 and 202 are deformed outward by the elastic force and move to the pressing position where the pressing members press the inner surface of the heat transfer tube 66 as indicated by the two-dotted chain line of FIG. 7.

In this state, the sleeve 112 is located inside the heat transfer tube 66 while facing the damaged portion of the heat transfer tube 66, so that one pressing member 201 presses the inner surface of the heat transfer tube 66 at one side of the damaged portion and the other pressing member 202 presses the inner surface of the heat transfer tube 66 at the other side of the damaged portion. For this reason, even when the damaged portion is abraded by the vibration of the heat transfer tube 66 and the heat transfer tube 66 is broken at the damaged portion, the end portions of the heat transfer tube 66 at the front and rear sides of the breakage position are held in a connection state by the sleeve 112 and the pressing members 201 and 202, and hence a large vibration of the heat transfer tube 66 is suppressed.

In this way, the heat transfer tube repairing apparatus of the second embodiment is provided with the wire 111, the sleeve 112, the pair of pressing members 201 and 202, and the operation members 203 and 204. Then, as the operation members 203 and 204, there are provided the regulation members 131 and 132 that engage with the pressing members 201 and 202 so as to hole the pressing members at the separating position, the releasing member 133 that is connected to the regulation member 131, and the releasing member 134 that connects the regulation members 131 and 132 to each other.

Accordingly, the releasing members 133 and 134 that release the regulation members 131 and 132 from the pressing members 201 and 202 extend only toward the base end portion of the wire 111, and hence the operator may release all the regulation members 131 and 132 from the entrance chamber of the steam generator. Thus, the operability may be improved.

### [Third Embodiment]

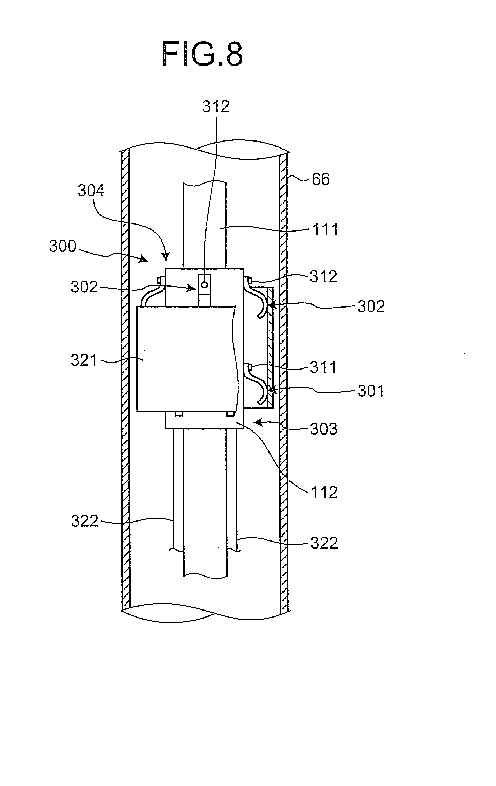

FIG. 8 is a front view illustrating a heat transfer tube repairing apparatus according to a third embodiment of the invention. Furthermore, the same reference signs will be given to the members having the same functions as those of the above-described embodiment, and the detailed description thereof will not be repeated.

In the third embodiment, as illustrated in FIG. 8, a heat transfer tube repairing apparatus 300 includes the wire 111 which is flexible and is insertable into the heat transfer tube 66, the sleeve 112 which is fixed to a predetermined position of the wire 111 in the longitudinal direction, a pair of pressing members 301 and 302 that is provided at the front and rear sides of the sleeve 112 in the longitudinal direction of the wire 111 and is able to press the inner surface of the heat transfer tube 66, and an operation member 303 that is able to move the pressing members 301 and 302 between a pressing position where the pressing members press the inner surface of the heat transfer tube 66 and a separating position where the pressing members are separated from the inner surface of the heat transfer tube 66. In this case, the sleeve 112 and the pair of pressing members 301 and 302 constitute a repairing member 304.

The pair of pressing members 301 and 302 may be held at the pressing position by the elastic force (the biasing force), and the operation member 303 may hold the pressing members 301 and 302 at the separating position against the elastic force.

That is, a plurality of (in this embodiment, four) spring members constituting the pressing members 301 and 302 are disposed at a predetermined interval (the same interval) in the circumferential direction of the front and rear portions (the upper and lower portions) of the outer peripheral portion of the sleeve 112. That is, the pressing members 301 and 302 as the spring members are disposed in the longitudinal direction of the sleeve 112 (the wire 111), the base end portions thereof are fixed to the sleeve 112 by fixing members (welding portions, screws, or the like)) 311 and 312, and the front end portions thereof extend so as to be curved outward in the radial direction of the sleeve 112 at the rear portion (the lower portion of FIG. 8) at the rear portion of the sleeve 112 (the wire 111) in the longitudinal direction.

That is, the pair of front and rear pressing members 301 and 302 serves as the elastic members of which the base end portions are fixed to the outside of the sleeve 112 and the front end portions are formed in a curved shape and press the inner surface of the heat transfer tube 66 by the elastic force.

The operation member 303 includes a regulation member 321 that engages with the pressing members 301 and 302 so as to hold the pressing members at the separating position and a releasing member 322 that releases the engagement of the regulation member 322 with respect to the pressing members 301 and 302. That is, as described above, the front end portions of the pressing members 301 and 302 extend rearward in the longitudinal direction of the sleeve 112 and are curved outward in the radial direction. The regulation member 321 is a cylindrical regulation ring, and when the regulation member is fitted to the pressing members 301 and 302 from the outside, the pressing members 301 and 302 are deformed inward in the radial direction of the sleeve 112 against the elastic force, and hence may be held at the separating position.

A plurality of (in this embodiment, four) releasing members 322 are flexible and are disposed inside the heat transfer tube 66 along the wire 111. In the releasing member 322, one end portion thereof is connected to a position of a predetermined interval (the same interval) in the circumferential direction of the regulation member 321 and the other end portion thereof extends toward the base end portion of the wire 111.

Here, a heat transfer tube repairing method by the heat transfer tube repairing apparatus 300 with such a configuration will be described.

The operator inserts the front end portion of the wire 111 of the heat transfer tube repairing apparatus 300 into the heat transfer tube 66, and positions the sleeve 112 to a position facing the damaged portion of the heat transfer tube 66. When the sleeve 112 is positioned to the position facing the damaged portion, the wire 111 is immovably supported. Then, the releasing member 322 is pulled so as to separate the regulation member 321 from the pressing members 301 and 302. Then, when the regulation member 321 is released from the outside, the pressing members 301 and 302 are deformed outward by the elastic force and moves to the pressing position where the pressing members press the inner surface of the heat transfer tube 66.

In this state, the sleeve 112 is located inside the heat transfer tube 66 so as to face the damaged portion of the heat transfer tube 66, so that one pressing member 301 presses the inner surface of the heat transfer tube 66 at one side of the damaged portion and the other pressing member 302 presses the inner surface of the heat transfer tube 66 at the other side of the damaged portion. For this reason, even when the damaged portion is abraded by the vibration of the heat transfer tube 66 and the heat transfer tube 66 is broken at the damaged portion, the end portions of the heat transfer tube 66 at the front and rear sides of the breakage position are held in a connection state by the sleeve 112 and the pressing members 301 and 302, and hence a large vibration of the heat transfer tube 66 is suppressed.

In this way, the heat transfer tube repairing apparatus of the third embodiment is provided with the wire 111, the sleeve 112, the pair of pressing members 301 and 302, and the operation member 303. Then, as the operation member 303, there are provided the regulation member 321 that engage with the pressing members 301 and 302 so as to hold the pressing members at the separating position and the releasing member 322 that is connected to the regulation member 321.

Accordingly, one regulation member 321 is provided for the pressing members 301 and 302, and the releasing member 322 that releases the regulation member 321 extends only toward the base end portion of the wire 111. For this reason, since the locking portion is not necessary for the pressing members 301 and 302, the structure may be simplified. Further, since the operator may separate the entire regulation member 321 from the entrance chamber of the steam generator, the operability may be improved.

Furthermore, in the first embodiment to the third embodiment, the pressing member is configured as the spring member so as to be pressed against the inner surface of the heat transfer tube by the elastic force thereof. However, the pressing member may be formed a synthetic resin so as to be pressed against the inner surface of the heat transfer tube by the elastic force thereof. Further, the pressing member may be pressed against the inner surface of the heat transfer tube by the biasing force of the different biasing member. Further, a configuration may be employed in which the pressing member is biased and supported by the biasing force to a position separated from the inner surface of the heat transfer tube and the pressing member is pressed against the inner surface of the heat transfer tube against the biasing force by the releasing member.

Further, the shapes, the number, and the arrangement positions of the pressing members are not limited to the above-described embodiments, and may be appropriately set. Further, the shape of the sleeve is not limited to the cylindrical shape, and may be a prismatic shape. Further, the sleeve may also serve as the cord-like member. Then, a configuration may be employed in which the cord-like member and the sleeve are detachably provided, the sleeve is held by the inner surface of the heat transfer tube through the pressing member, and the cord-like member is separated.

### [Fourth Embodiment]

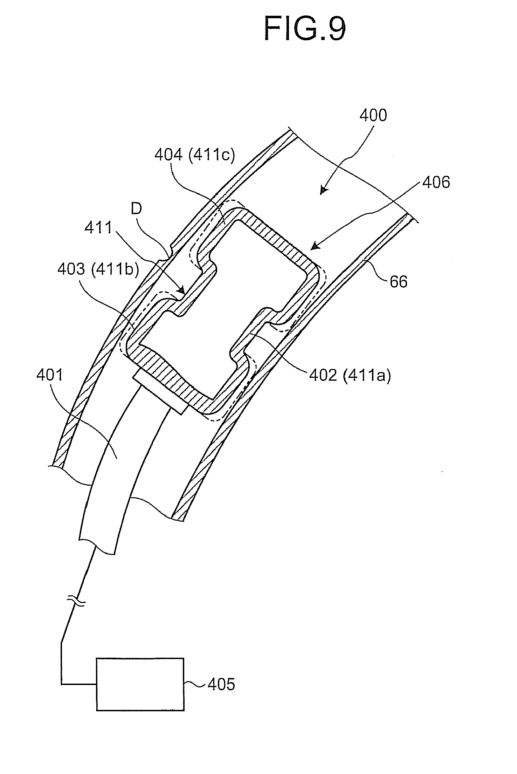

FIG. 9 is a schematic diagram illustrating a heat transfer tube repairing apparatus according to a fourth embodiment of the invention. Furthermore, the same reference signs will be given to the members having the same functions as those of the above-described embodiment, and the detailed description thereof will not be repeated.

In the fourth embodiment, as illustrated in FIG. 9, a heat transfer tube repairing apparatus 400 includes a hose (cord-like member) 401 which is flexible and is insertable into the heat transfer tube 66, a sleeve 402 which is fixed to a predetermined position of the hose 401 in the longitudinal direction, a pair of pressing members 403 and 404 that is provided at the front and rear sides of the sleeve 402 in the longitudinal direction of the hose 401 and is able to press the inner surface of the heat transfer tube 66, and an operation member 405 that is able to move the pressing members 403 and 404 between a pressing position where the pressing members press the inner surface of the heat transfer tube 66 and a separating position where the pressing members are separated from the inner surface of the heat transfer tube 66. In this case, the sleeve 402 and the pair of pressing members 403 and 404 constitute a repairing member 406.

The outer diameter of the hose 401 is smaller than the inner diameter of the heat transfer tube 66, and the front end portion of the hose is connected with a hollow member 411. The hollow member is formed in a cylindrical shape, has a predetermined length, and includes a small diameter portion 411a which is located at the middle portion and two large diameter portions 411b and 411c which located at the respective end portions. That is, the small diameter portion 411a of the hollow member 411 serves as the sleeve 402, and the respective large diameter portions 411b and 411c serve as the pressing members 403 and 404. The operation member 405 is an air supply source. That is, the operation member may hold the pair of pressing members 403 and 404 at the pressing position by the elastic force (the biasing force) by expanding the pair of pressing members with the supply of the air into the hollow member 411 through the hose 401 and may hold the pressing members 403 and 404 at the separating position by stopping the supply of the air.

Here, a heat transfer tube repairing method by the heat transfer tube repairing apparatus 400 with such a configuration will be described.

The operator inserts the front end portion of the hose 401 of the heat transfer tube repairing apparatus 400, that is, the hollow member 411 into the heat transfer tube 66, and positions the sleeve 402 to a position facing the damaged portion D of the heat transfer tube 66. When the sleeve 402 is positioned to the position facing the damaged portion, the hose 401 is immovably supported. Then, air is supplied from the operation member 405 into the hollow member 411 through the hose 401, so that the respective pressing members 403 and 404 are expanded so as to move to the pressing position where the pressing members press the inner surface of the heat transfer tube 66.

In this state, the sleeve 402 is located inside the heat transfer tube 66 so as to face the damaged portion of the heat transfer tube 66, one pressing member 403 presses the inner surface of the heat transfer tube 66 at one side of the damaged portion D, and the other pressing member 404 presses the inner surface of the heat transfer tube 66 at the other side of the damaged portion D. For this reason, even when the damaged portion D is abraded by the vibration of the heat transfer tube 66 and the heat transfer tube 66 is broken at the damaged portion D, the end portions of the heat transfer tube 66 at the front and rear sides of the breakage position are held in a connection state by the sleeve 402 and the pressing members 403 and 404, and hence a large vibration of the heat transfer tube 66 is suppressed.

In this way, the heat transfer tube repairing apparatus of the fourth embodiment is provided with the hose 401, the sleeve 402, the pair of pressing members 403 and 404, and the operation member 405. Then, the shrinkable hollow member 411 is connected to the front end portion of the hose 401, the hollow member 411 is provided with the sleeve 402 and the pressing members 403 and 404, and the pressing members 403 and 404 are movable between the pressing position and the separating position by the operation member 405.

Accordingly, the hose 401 is inserted into the heat transfer tube 66, the sleeve 402 is positioned to a position facing the damaged portion D of the heat transfer tube 66, and the respective pressing members 403 and 404 located at the separating position where the pressing members are separated from the inner surface of the heat transfer tube 66 move to the pressing position where the pressing members are pressed against the inner surface of the heat transfer tube 66 by the operation member 405. Then, since the sleeve 402 is disposed at a position facing the damaged portion D of the heat transfer tube 66 and the front and rear pressing members 403 and 404 press the front and rear sides of the damaged portion D, the sleeve 402 is held at a position facing the damaged portion D of the heat transfer tube 66. For this reason, the vibration of the heat transfer tube 66 may be appropriately suppressed not only in the heat transfer tube 66 which is thinned by abrasion but also the heat transfer tube 66 which is broken at the damaged portion D.

In the fourth embodiment, the operation member 405 is configured as the air supply source, but may be a water supply source. Further, a check valve may be provided in the connection portion between the hose 401 and the sleeve 402, and the hose 401 may be separated from the sleeve 402.

Further, in the above-described embodiments, it is effective to dispose the heat transfer tube repairing apparatus of the invention at the U-bent portion of the reverse U-shaped heat transfer tube, but the substantially same operation and effect may be obtained even when the heat transfer tube repairing apparatus is applied to a straight portion. Further, one sleeve is provided for the cord-like member, but in a case where a plurality of damaged portions are present in one heat transfer tube, a plurality of sleeves may be provided for the cord-like member. Then, in the above-described embodiments, the heat transfer tube repairing apparatus of the invention is applied to the heat transfer tube which is used in the steam generator of the pressurized water reactor (PWR), but the invention is not limited thereto. For example, even when the heat transfer tube repairing apparatus is applied to a general heat exchanger, the substantially same operation and effect may be obtained. That is, the operation and the effect are not dependent on the shape of the heat transfer tube.

### Reference Signs List

- 11: CONTAINMENT

- 12: PRESSURIZED WATER REACTOR
- 13: STEAM GENERATOR
- 32: STEAM TURBINE
- 36: POWER GENERATOR
- 61: CYLINDER PORTION
- 62: TUBE BUNDLE SHROUD
- 63: TUBE SUPPORT PLATE
- 64: TUBE SHEET
- 66: HEAT TRANSFER TUBE
- 100, 200, 300, 400: REPAIRING APPARATUS
- 101, 205, 304: REPAIRING MEMBER (HEAT TRANSFER TUBE REPAIRING MEMBER)
- 111: WIRE (CORD-LIKE MEMBER)
- 112: SLEEVE
- 113, 114, 201, 202, 301, 302: PRESSING MEMBER
- 115, 116, 203, 204, 303: OPERATION MEMBER
- 121: SPRING MEMBER (ELASTIC MEMBER)
- 123, 124, 213, 214: LOCKING PORTION
- 131, 132, 321: REGULATION MEMBER (REGULATION RING)
- 133, 134, 322: RELEASING MEMBER
- 401: HOSE (CORD-LIKE MEMBER)
- 402: SLEEVE
- 403, 404: PRESSING MEMBER

- 405: OPERATION MEMBER
- 406: REPAIRING MEMBER (HEAT TRANSFER TUBE REPAIRING MEMBER)

## Claims

1. A heat transfer tube repairing apparatus (100; 200; 300; 400) comprising:
a cord-like member (111; 401) that is flexible and inserted into a heat transfer tube (66);
a sleeve (112; 402) that is fixed to a predetermined position in a longitudinal direction of the cord-like member (111; 401);
a pair of pressing members (113, 114; 201, 202; 301, 302) that is provided at the front and rear sides of the sleeve (112; 402) in the longitudinal direction of the cord-like member (111; 401) for pressing an inner surface of the heat transfer tube (66); and
an operation member (115, 116; 203, 204; 303) that moves the pressing members (113, 114; 201, 202; 301, 302) between a pressing position where the pressing members (113, 114; 201, 202; 301, 302) press the inner surface of the heat transfer tube (66) and a separating position where the pressing members (113, 114; 201, 202; 301, 302) are separated from the inner surface of the heat transfer tube (66).

2. The heat transfer tube repairing apparatus (100; 200; 300; 400) according to claim 1, wherein
the operation member (115, 116; 203, 204; 303) includes a regulation member (131, 132; 321) that engages with the pressing members (113, 114; 201, 202; 301, 302) so as to hold the pressing members (113, 114; 201, 202; 301, 302) at the pressing position or the separating position, and a releasing member (133, 134, 322) that releases the engagement of the regulation member (131, 132; 321) with respect to the pressing members (113, 114; 201, 202; 301, 302).

3. The heat transfer tube repairing apparatus (100; 200; 300; 400) according to claim 1 or 2, wherein
the pressing members (113, 114; 201, 202; 301, 302) are held at the pressing position by a biasing force, and the operation member (115, 116; 203, 204; 303) holds the pressing members (113, 114; 201, 202; 301, 302) at the separating position against the biasing force.

4. The heat transfer tube repairing apparatus (100; 200; 300; 400) according to claim 3, wherein
each pressing member includes an elastic member (121) of which the base end portion is fixed to the outside of the sleeve (112; 402) and the front end portion presses the inner surface of the heat transfer tube (66) by an elastic force, and a plurality of the elastic members are disposed at a predetermined interval in the circumferential direction of the sleeve (112; 402) and are disposed at the front and rear portions in the longitudinal direction of the cord-like member (111; 401).

5. The heat transfer tube repairing apparatus (100; 200; 300; 400) according to claims 2 and 4, wherein
the regulation member (131, 132; 321) includes a regulation ring which holds the elastic member (121) at the separating position.

6. The heat transfer tube repairing apparatus (100; 200; 300; 400) according to any one of claims 1 to 5, wherein
the cord-like member (111; 401) is disposed inside the heat transfer tube (66) and has a vibration suppressing function to suppress vibration of the heat transfer tube (66).

7. The heat transfer tube repairing apparatus (100; 200; 300; 400) according to any one of claims 1 to 6, wherein
a plugging member that blocks the end portion of the heat transfer tube (66) is connected to a rear end portion of the cord-like member (111; 401).

8. The heat transfer tube repairing apparatus (100; 200; 300; 400) according to any one of claims 1 to 7, wherein
the heat transfer tube (66) includes a U-shaped portion, and the sleeve (112; 402) is disposed in the U-shaped portion.

9. A heat transfer tube repairing method comprising:
inserting a flexible cord-like member (111; 401) into a heat transfer tube (66);
positioning a repairing member (101; 205; 304; 406) provided at a predetermined position in the longitudinal direction of the cord-like member (111; 401) to a position facing a damaged portion in the heat transfer tube (66); and
pressing the repairing member (101; 205; 304; 406) against inner surfaces at the front and rear sides of the damaged portion of the heat transfer tube (66).

10. A steam generator (13) comprising:
a cylinder portion (61) that is formed in a hermetic hollow shape;
a heat transfer tube bundle (67) that includes a plurality of heat transfer tubes (66) which are disposed inside the cylinder portion (61) so as to form a reverse U-shape and through which primary cooling water flows;
a tube sheet (64) that is fixed to a lower portion inside the cylinder portion (61) and supports end portions of the plurality of heat transfer tubes (66);
an entrance side channel head and an exit side channel head that are provided at the lower end portion of the cylinder portion (61) and communicate with the respective end portions of the plurality of heat transfer tubes (66);
a water feeding portion that supplies secondary cooling water into the cylinder portion (61);
a steam outlet that is provided at the upper end portion of the cylinder portion (61); and
a heat transfer tube repairing member (101; 205; 304; 406) that is pressed and held on inner surfaces at the front and rear sides of a damaged portion of the heat transfer tube (66).
